## Europäisches Patentamt
## European Patent Office
## Office européen des brevets

(19)

(11) Numéro de publication: **0 196 988**
**B1**

(12)
# FASCICULE DE BREVET EUROPEEN

(45) Date de publication du fascicule du brevet:
**17.11.88**

(51) Int. Cl.⁴: **B 29 C 45/16**

(21) Numéro de dépôt: **86420083.7**

(22) Date de dépôt: **21.03.86**

(54) **Moule pour la production de pièces composites.**

(30) Priorité: **22.03.85 FR 8504518**

(43) Date de publication de la demande:
**08.10.86 Bulletin 86/41**

(45) Mention de la délivrance du brevet:
**17.11.88 Bulletin 88/46**

(84) Etats contractants désignés:
**AT BE CH DE FR GB IT LI NL SE**

(56) Documents cités:
**EP - A - 0 070 763**
**DE - B - 1 241 094**
**FR - A - 2 347 172**
**FR - A - 2 380 864**
**FR - A - 2 462 261**
**GB - A - 2 021 476**

**PATENT ABSTRACTS OF JAPAN, vol. 7, no. 59, (M-199)**
**[1204], 11 mars 1983**

(73) Titulaire: **CARTIER INDUSTRIE, Zone Industrielle,**
**F-74300 Thyez (FR)**

(72) Inventeur: **Schombiond, Jacques, Montagnieu le Village,**
**F-38110 La Tour du Pin (FR)**

(74) Mandataire: **Karmin, Roger et al, Cabinet**
**MONNIER 150, cours Lafayette, F-69003 Lyon (FR)**

**Description**

La présente invention est relative à des perfectionnements apportés aux moules destinés à la réalisation de pièces composites telles que les feux multicolores de vèhicules, ou les organes réalisés en plusieurs matières.

On connaît un procédé de moulage par injection de pièces multicolores en matière plastique, objet du certificat d'addition français 2 425 317, qui décrit aussi le moule pour la mise en œuvre dudit procédé. Ce moule comporte des lames transversales qui constituent les parois latérales de plusieurs cavités alignées et dans lesquelles sont injectées des matières de couleurs différentes. Une fois cette injection terminée, les lames sont déplacées transversalement de manière qu'une injection ultérieure remplisse la partie de la cavité encore vide, ces parois latérales étant alors constituées par les éléments déjà moulés.

On comprend aisément que si l'on a affaire à des pièces d'importante épaisseur, les lames sont déformées transversalement par la pression d'injection, de telle sorte que leur déplacement devient pratiquement impossible. Dans ces conditions, le moule décrit dans le document considéré n'est pas susceptible d'être utilisé pour la fabrication de pièces épaisses de plusieurs couleurs et/ou matières.

On connaît aussi, par le document FR 2 462 261, un moule susceptible de permettre l'injection d'une pièce composite d'épaisseur importante du fait qu'il comprend un poinçon qui vient prendre appui contre le fond de la cavité pour constituer les parois latérales de deux chambres dans lesquelles des matières de couleurs et/ou de qualités différentes sont injectées simultanément ou successivement. Puis le poinçon est déplacé de manière qu'entre son extrémité et le fond de la cavité, on détermine une troisième chambre dans laquelle on injecte une autre matière. On comprend aisément que le déplacement du poinçon net peut pas être fait de manière suffisament précise pur éviter tout décalage de la troisième injection par rapport aux deux autres. Dans certaines pièces, un tel décalage est absolument proscrit, de telle sorte que ce moule n'est pas utilisable dans ces cas là.

On connaît encore des moules dits «à transfert», c'est-á-dire comportant un poinçon unique et plusieurs matrices, les injections successives étant toujours faites sur le poinçon qui déplace la pièce déjà obtenue dans les matrices successives jusqu'à la dernière injection. On comprend aisément qu'un tel appareillage est extrêmement coûteux et que les éléments moulés dans une matrice puissent être facilement cassés lors de leur transport d'une matrice à l'autre.

On connaît enfin par le document japonais JP-A 57-203 531 un moule dont la partie coulissante est constituée par deux blocs dans chacun desquels est creusée une partie d'une cavité de forme correspondant à celle de l'un des éléments de la pièce à réaliser, cet élément étant moulé par une première injection dans ladite cavité alors que ladite partie coulissante est décalée par rapport au plan moyen de l'empreinte destinée au moulage d'au moins un autre élément et qui est ménagée dans une partie fixe du moule, cet autre élément étant injecté après le retour de la partie coulissante à la position dans laquelle sa cavité est en correspondance avec l'empreintre. Le préambule de la revendication 1 décrit un moule tel que celui faisant l'objet dudit document japonais.

Les perfectionnements qui font l'objet de la présente invention visent à réaliser un moule du type énoncé dans le document de brevet japonais précité, et permettent le moulage de pièces composites constitués de trois éléments.

Le moule conforme à l'invention comporte un second coulisseau disposé parallèlement au premier, ledit coulisseau comportant deux blocs définissant entre eux une cavité pour le moulage par injection d'un troisième élément, ledit second coulisseau étant associé à des moyens permettant de le déplacer dans deux positions, une position où sa cavité de moulage est décalé par rapport à l'empreinte et une position où sa cavité de moulage est en correspondance avec l'empreinte.

Le dessin annexé, donné à titre d'exemple, permettra de mieux comprende l'invention, les caractéristiques qu'elle présente et les avantages qu'elle est susceptible de procurer:

Fig. 1 est une coupe d'un moule établi conformément à la technique connue et illustrant le moulage des deux parties externes de la pièce à obtenir.

Fig. 2 est une vue semblable à celle de fig. 1, mais montrant la cavité du coulisseau alignée avec les éléments préalablement moulés en vue de permettre l'injection d'une partie centrale de couleur et/ou de matière différente.

Fig. 3 illustre comment la partie coulissante peut comprendre des systèmes permettant un encastrement de l'élément central par rapport aux éléments latéraux.

Fig. 4 illustre une pièce comportant deux éléments de couleurs et/ou de natures différentes entourés d'un élément qui les supporte.

Fig. 5 est une vue semblable à celle de fig. 1 et 2, mais montrant un moule réalisé avec un bloc fixe et deux coulisseaux.

Fig. 6, 7 et 8 montrent les trois phases du moulage d'une pièce composée de trois éléments et comportant ses deux coulisseaux placés côte à côte.

Fig. 9 montre une pièce susceptible d'être moulée grâce à l'outillage de fig. 6 à 8.

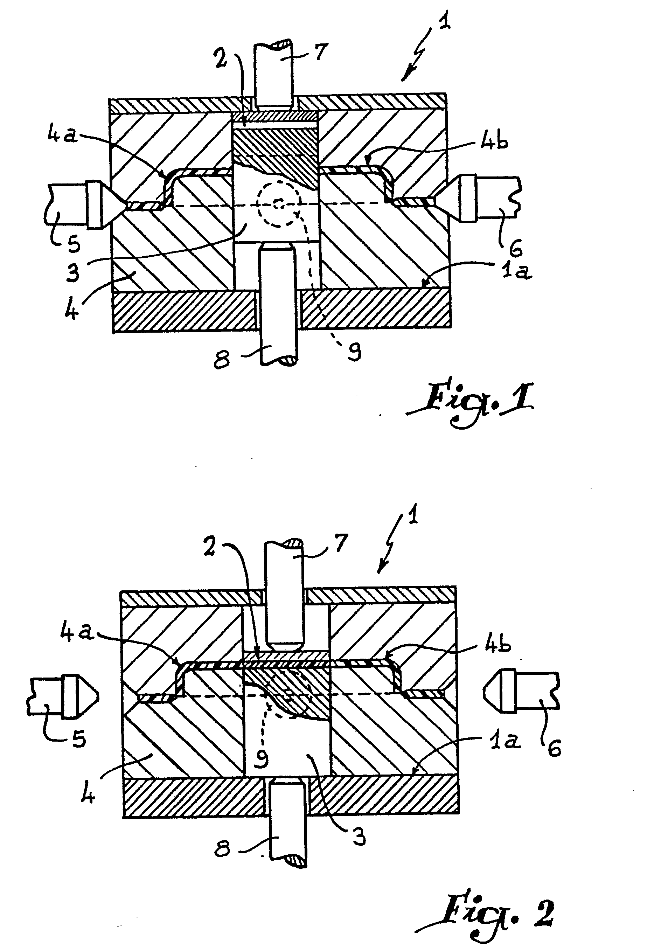

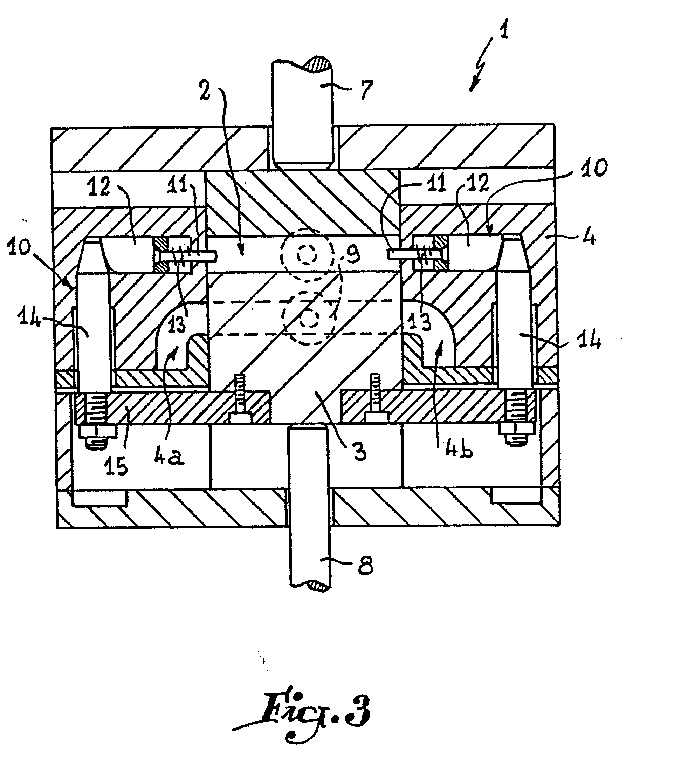

On a illustré en fig. 1, 2, 3 et 5 un moule 1 établi conformément à l'art antérieur et destiné à la fabrication d'une pièce comportant trois éléments moulés respectivement dans la cavité 2 d'un coulisseau 3 et dans l'empreinte 4a et 4b de la partie fixe 4 du moule (fig. 3). Bien entendu, le coulisseau est réalisé en deux pièces ainsi que la partie 4, de manière à autoriser le démoulage de la pièce finie comme cela est bien connu dans la pratique. Dans la première phase illustrée en fig. 1, le coulisseau est déplacé de manière que la cavité soit décalée par rapport aux empreintes 4a, 4b. Ainsi celles-ci comportent comme parois latérales les faces latérales du coulisseau. On injecte simultanément ou successivement de la matière plastique dans les empreintes 4a, 4b au moyen de deux têtes d'injection 5 et 6. Une fois le moulage terminé et les éléments solidifiés, le coulisseau est déplacé au moyen de deux vérins dont on n'a représenté que les pistons 7 et 8 afin que sa cavité 2 vienne se situer très exactement en face des deux éléments moulés précédemment. Pour ce faire, le coulisseau vient buter de manière précise contre une face 1a du moule, de telle sorte qu'aucun décalage ne puisse exister entre l'élément moulé dans la cavité 2 et ceux réalisés dans les empreintes 4a et 4b. Bien entendu, une fois le coulisseau en place, la cavité est remplie au moyen d'une troisième tête d'injection 9 (fig. 2).

Dans le mode d'exécution de fig. 3, on a prévu du réaliser dans le bloc fixe 4 des mécanismes 10 susceptibles de constituer des rainures le long des tranches de l'élément moulé dans la cavité 2 qui se trouvent en vis-à-vis des éléments moules dans les empreintes 4a et 4b. Naturellement, dans ce cas, on moule d'abord l'élément central correspondant à la cavité 2 qui est réalisé en premier, puis le coulisseau est descendu pour effectuer le moulage dans les empreintes 4a et 4b. Chaque dispositif 10 comporte une lame 11 qui est introduite dans la cavité 2 grâce à la présence d'un coin 12 qui déplace la lame dans la cavité à l'encontre d'un ressort de compression 13, du fait que le coin vient coopérer avec une extrémité pointue d'une tige 14 fixée sur un plateau 15 solidaire de la base du coulisseau 3. Chaque ressort 13 est en appui contre le coin correspondant 12 et repousse celui-ci lorsque la tige 14 s'efface afin d'extraire la lame 11. Ainsi, pendant l'injection dans la cavité 2, les lames sont disposées dans celle-ci le long de ses deux bords opposés. A la fin de l'injection, lorsqu'on descend le coulisseau 3, les tiges 14 libèrent les coins 12 et les lames rentrent grâce à la réaction des ressorts 13. Ainsi, l'élément moulé dans la cavité 2 se présente en face des empreintes 4a et 4b avec des rainures d'encastrement augmentant comme indiqué plus haut la solidité de la pièce obtenue.

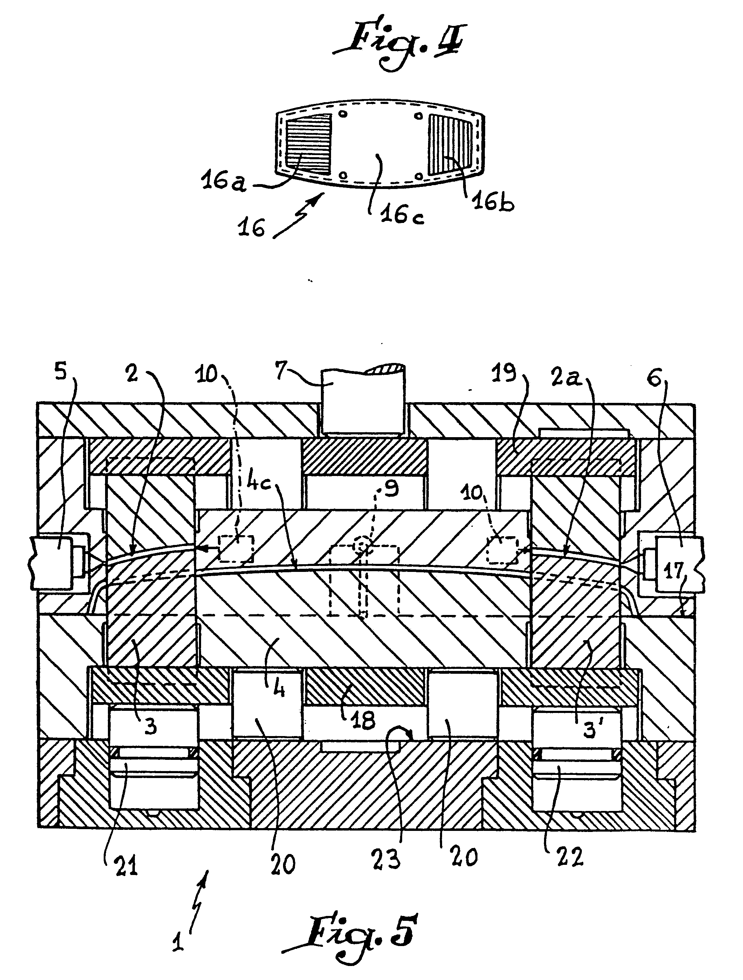

Dans les modes d'exécution de fig. 1 à 3, les deux parties du coulisseau 3 sont en contact l'une avec l'autre suivant leur plan de joint, de même d'ailleurs que les deux composants de la partie fixe 4. Quand on désire réaliser une pièce 16 telle que celle illustrée en fig. 4 et comportant deux éléments 16a et 16b complètement noyés dans un élément 16c, il est nécessaire d'utiliser un moule tel qu'illustré en fig. 5.

Dans celui-ci, on trouve deux coulisseaux 3 et 3', déterminant une cavité 2, 2a respectivement. Dans celles-ci sont moulés les éléments 16a, 16b les deux coulisseaux étant alors décalés vers le haut par rapport à l'empreinte 4c de la partie fixe 4 du moule. On observe que les deux coulisseaux 3 et 3' se déplacent à l'intérieur de la partie fixe 4 de telle sorte que l'empreinte 4c de celle-ci s'étend également au-delà des deux coulisseaux.

L'injection des éléments 16a et 16b s'effectue au moyen des têtes d'injection 5 et 6 lorsque les coulisseaux sont décalés vers le haut. Puis ceux-ci sont descendus de manière que l'élément 16c soit moulé dans l'empreinte 4c au moyen de la troisième tête d'injection 9.

On note que les deux composants de la partie 4 sont en appui l'un contre l'autre suivant un plan de joint périphérique 17. Les deux blocs des coulisseaux sont respectivement associés à une plaque de base 18 et à un plateau supérieur 19 qui coulisse par rapport à des chandelles d'appui 20. Le plateau supérieur est associé à la tige de piston 7, tandis que la plaque de base 18 coopère avec deux pistons 21, 22 jouant le rôle du piston 8.

Dans ce mode d'exécution, les deux blocs de chacun des coulisseaux 3 et 3' sont respectivement assujettis à la plaque de base 18 et au plateau supérieur 19. Des entretoises non représentées relient la plaque de base 18 et le plateau supérieur 19 en vue de déterminer exactement l'épaisseur des cavités 2 et 2a.

Une fois que l'injection des éléments 16a, 16b est faite dans lesdites cavités, les coulisseaux sont redescendus et la position desdites cavités par rapport à l'empreinte 4c est déterminée très exactement avec précision par butée de la plaque de base contre une surface d'appui 23. Là encore, on évite tout décalage entre les éléments 16a, 16b et celui 16c.

Dans la partie fixe 4 du moule, on peut prévoir des dispositifs 10 tels que ceux illustrés en fig. 3, de manière à permettre la réalisation dans au moins certaines tranches des éléments 16a et 16b de rainures d'accrochage renforçant la solidité de la pièce 16.

Chaque coulisseau 3, 3' pourrait être pourvu de moyens permettant de ménager une gorge sur au moins une partie de la longueur de la tranche de l'élément moulé dans la cavité (2, 2a) correspondante.

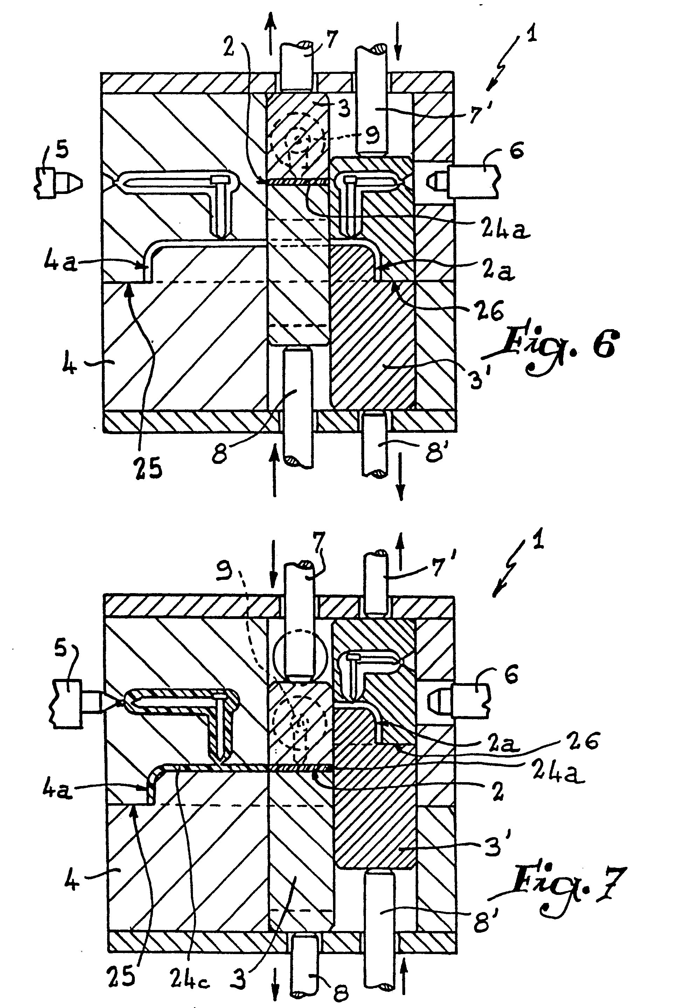

Suivant le mode d'exécution conforme à l'invention et illustré en fig. 6, 7 et 8, le moule est réalisé toujours au moyen de deux coulisseaux, mais ceux-ci sont disposés côte à côte; on peut ainsi réaliser un moulage suivant trois plans de joint différents. Par exemple, on peut ainsi fabriquer une pièce telle que celle 24 illustrée en fig. 9 et qui comporte un élément central 24a entouré de part et d'autre par deux éléments différents 24b et 24c, lesquels sont adjacents par deux lignes de jonction 24d, 24e. Le moule illustré en fig. 6 à 8 comporte une partie fixe 4 en deux composants qui reposent l'un par rapport à l'autre selon un plan de joint 25. L'empreinte 4a destinée au moulage de l'élément 24c de la pièce 24 est déterminée en partie dans chacun des composants précités de la partie fixe 4.

De manière adjacente à celle-ci est disposé le coulisseau 3 dont la cavité 2 est destinée au moulage de l'élément 24a de la pièce 24, tandis qu'un second coulisseau 3' placé à côté de celui 3 comporte une cavité 2a destinée au moulage de l'élément 24b de la pièce 24. On observe que les deux blocs du coulisseau 3' sont en contact par un plan de joint 26. Le coulisseau 3 est associé aux pistons 7 et 8 décrits en référence à fig. 1 à 3, tandis que le coulisseau 3' coopère avec deux autres vérins dont les tiges de piston ont été référencées 7' et 8'.

Comme illustré en fig. 6, on place d'abord le coulisseau 3' de manière que sa cavité 2a soit dans le plan de l'empreinte 4a de la partie 4, tandis que le coulisseau 3 est décalé vers le haut. Au moyen de la tête d'injection 9, on injecte de la matière plastique dans la cavité 2 du coulisseau 3, cette cavité étant fermée latéralement par les côtés de la partie 4 du coulisseau 3'.

Puis, comme illustré en fig. 7, le coulisseau 3 est descendu de manière que sa cavité se trouve en face de l'empreinte 4a de la partie 4, tandis que le coulisseau 3' est remonté afin qu'il vienne obturer l'empreinte 4a au niveau des jonctions 24d, 24e, des éléments 24b et 24c moulés respectivement dans l'empreinte 4a et dans la cavité 2a. La tête d'injection 5 déverse alors de la matière dans l'empreinte 4a pour réaliser l'élément 24c de la pièce.

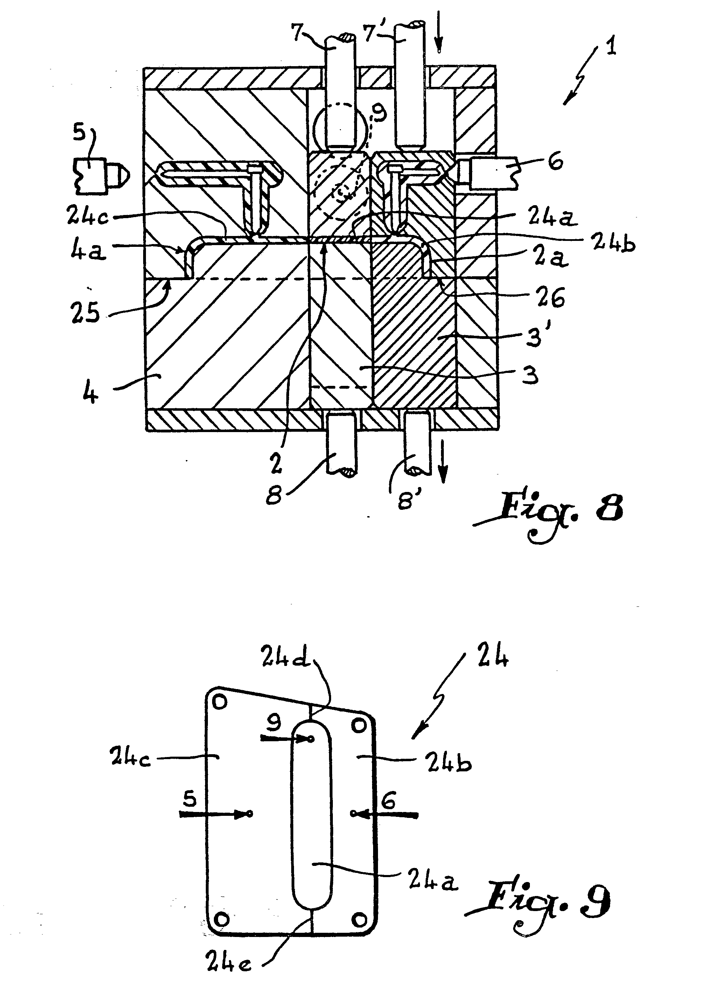

Enfin, comme illustré en fig. 8, le coulisseau 3' est descendu pour que sa cavité vienne en vis-à-vis de celle du coulisseau 3 et de l'empreinte 4a. Par la tête d'injection 6, on moule dans la cavité 2a du coulisseau 3' l'élément 24b de la pièce 24.

Ainsi, le moule illustré en fig. 6 à 8 permet-il d'obtenir la pièce 24 de fig. 9 sur laquelle on a figuré de manière schématique les trois têtes d'injection 9, 5 et 6 qui moulent l'une après l'autre les différents éléments de la pièce 24.

## Revendication

Moule destiné à la fabrication d'un corps en plusieurs éléments comprenant au moins un coulisseau (3, 3') déplaçable à l'intérieur d'une partie fixe du moule, le coulisseau comportant deux blocs définissant entre eux une cavité pour le moulage par injection d'un premier élément et la partie fixe du moule comportant une empreinte (4a) pour le moulage par injection d'un second élément, le coulisseau étant associé à des moyens permettant de le déplacer dans deux positions, une position où sa cavité de moulage est décalée par rapport à l'empreinte (4a) et où est effectué le moulage par injection du premier élément, et une seconde position où sa cavité de moulage est en correspondance avec l'empreinte (4a) et où est effectué le moulage du second élément, caractérisé en ce qu'il comporte un second coulisseau (3') disposé parallèlement au premier, ledit coulisseau comportant deux blocs définissant entre eux une cavité (2a) pour le moulage par injection d'un troisième élément, ledit second coulisseau (3') étant associé à des moyens (7', 8') permettant de le déplacer dans deux positions, une position où sa cavité de moulage est décalée par rapport à l'empreinte (4a) et une position où sa cavité de moulage est en correspondance avec l'empreinte (4a).

## Patentanspruch

Form zur Herstellung eines Gegenstandes aus mehreren Elementen mit mindestens einem im Inneren eines festen Teils der Form verschiebbaren Gleitstück (3, 3'), das zwei Blöcke umfasst, die zwischen sich einen Hohlraum begrenzen für das Spritzgiessen eines ersten Elementes, wobei der feste Teil der Form eine Aushöhlung (4a) für das Spritzgiessen eines zweiten Elementes aufweist und wobei das Gleitstück Mitteln zugeordnet ist, die es in zwei Stellungen verschiebt, nämlich eine Stellung, in der sein Formhohlraum in bezug auf die Aushöhlung (4a) versetzt ist und in der das Spritzgiessen des ersten Elementes vorgenommen wird, und eine zweite Stellung, in der sein Formhohlraum mit der Aushöhlung (4a) übereinstimmt und in der das Spritzgiessen des zweiten Elementes durchgeführt wird, dadurch gekennzeichnet, dass ein zweites Gleitstück (3') parallel zum ersten angeordnet ist, das zwei Blöcke umfasst, die zwischen sich einen Hohlraum (2a) für das Spritzgiessen eines dritten Elementes begrenzen, wobei das zweite Gleitstück (3') Mitteln (7', 8') zugeordnet ist, die seine Verschiebung in zwei Stellungen erlaubt, nämlich eine Stellung, in der sein Formhohlraum in bezug auf die Aushöhlung (4a) versetzt ist, und eine Stellung, in der der Formhohlraum in Übereinstimmung mit der Aushöhlung (4a) ist.

## Claim

Mould intended for the production of a body formed of a number of elements comprising at least one slide (3, 3'), movable in the inside of a fixed part of the mould, the slide comprising two blocks defining between them a cavity for the injection moulding of a first element and the fixed part of the mould comprising a mould (4a) for the injection moulding of a second element, the slide being associated with means allowing it to move into two positions, one position wherein its moulding cavity is offset in relation to the mould (4a) and wherein injection moulding of the first element is carried out, and a second position wherein its moulding cavity registers with the mould (4a) and wherein the second element is moulded, characterised in that it comprises a second slide (3') arranged parallel to the first, the said slide comprising two blocks defining between them a cavity (2a) for the injection moulding of a third element, the said second slide (3') being associated with means (7', 8') allowing it to move into two positions, one position wherein its moulding cavity is offset in relation to the mould (4a) and one position wherein its moulding cavity registers with the mould (4a).

*Fig. 1*

*Fig. 2*

0196988

*Fig.3*

7

*Fig. 4*

*Fig. 5*

*Fig. 6*

*Fig. 7*

*Fig. 8*

*Fig. 9*